# EUROPEAN PATENT APPLICATION

(11) **EP 4 501 861 A1**
(43) Date of publication of application: **05.02.2025**
(21) Application number: 24192664.1
(22) Date of filing: 02.08.2024
(51) Int. Cl.: C01G 53/00, H01M 4/36, H01M 4/525

(54) **POSITIVE ELECTRODE ACTIVE MATERIAL, PREPARATION METHOD THEREOF, POSITIVE ELECTRODE, AND RECHARGEABLE LITHIUM BATTERIES**

(30) Priority: 03.08.2023 KR 20230101766
(71) Applicant: SAMSUNG SDI CO., LTD., Giheung-gu Yongin-si, Gyeonggi-do 17084 (KR)
(72) Inventor: KIM, Young-Ki, 17084 Yongin-si (KR); CHOO, Sung Ho, 17084 Yongin-si (KR); KONG, Youngsun, 17084 Yongin-si (KR); KANG, Seok Mun, 17084 Yongin-si (KR); YOON, Jaesang, 17084 Yongin-si (KR); DOO, Sungwook, 17084 Yongin-si (KR); KANG, Gwiwoon, 17084 Yongin-si (KR); JUN, Dowook, 17084 Yongin-si (KR); KANG, Byungwuk, 17084 Yongin-si (KR); JEONG, Jaeyong, 17084 Yongin-si (KR)
(74) Representative: Marks & Clerk LLP

(57) **Abstract**

Disclosed are a positive electrode active material, a method of preparing the same, and a positive electrode and a rechargeable lithium battery including the same, the positive electrode active material including core particles including a lithium nickel-manganese-based composite oxide having a nickel content of greater than or equal to about 60 mol% based on 100 mol% of a total metal excluding lithium, and a coating layer disposed on the surface of the core particles and including Al, Zr, and Mg.

## Description

### BACKGROUND OF THE INVENTION

### (a) Field of the Invention

Positive electrode active materials, preparation methods thereof, and positive electrodes and rechargeable lithium batteries including the same are disclosed.

### (b) Description of the Related Art

A portable information device such as a cell phone, a laptop, smart phone, and the like or an electric vehicle has used a rechargeable lithium battery having high energy density and easy portability as a driving power source. Recently, research has been actively conducted to use a rechargeable lithium battery with high energy density as a driving power source or power storage power source for hybrid or electric vehicles.

Various positive electrode active materials have been investigated to realize rechargeable lithium batteries for applications to the uses. Among them, lithium nickel-based oxide, lithium nickel manganese cobalt composite oxide, lithium nickel cobalt aluminium composite oxide, and lithium cobalt oxide are mainly used as positive electrode active materials. However, while the demand for large-sized, high-capacity, or high-energy-density rechargeable lithium batteries has recently increased, the supply of a positive electrode active material containing cobalt, a rare metal, is expected to be severely short. In other words, since the cobalt is expensive and lacks remaining reserves, there is a need of developing a positive electrode active material excluding the cobalt or using it in a reduced amount.

### SUMMARY OF THE INVENTION

Some embodiments provide a positive electrode active material, which includes lithium nickel-manganese-based composite oxide, securing economic feasibility, high capacity, and long cycle-life characteristics and exhibiting improved high voltage characteristics and high-temperature characteristics, a method of preparing the positive electrode active material, and a positive electrode and a rechargeable lithium battery including the same.

In some embodiments, a positive electrode active material includes core particles including a lithium nickel-manganese-based composite oxide having a nickel content of greater than or equal to about 60 mol% based on 100 mol% of a total metal excluding lithium, and a coating layer disposed on the surface of the core particles and including Al, Zr, and Mg.

In some embodiments, a method of preparing a positive electrode active material includes (i) mixing a nickel-manganese-based composite hydroxide having a nickel content of greater than or equal to about 60 mol% based on 100 mol% of a total metal and a lithium raw material and performing a first heat treatment to obtain a lithium nickel-manganese-based composite oxide, (ii) adding the obtained lithium nickel-manganese-based composite oxide to a solution of Al raw material mixed in an aqueous solvent, followed by mixing and drying, and (iii) dry mixing the obtained product with a Zr raw material and a Mg raw material and performing a second heat treatment to obtain a positive electrode active material.

In some embodiments, a positive electrode includes a positive electrode current collector and a positive electrode active material layer on the positive electrode current collector, wherein the positive electrode active material layer includes the aforementioned positive electrode active material.

In some embodiments, a rechargeable lithium battery includes the positive electrode, a negative electrode, and an electrolyte.

At least some of the above and other features of the invention are set out in the claims.

The positive electrode active material according to some embodiments is prepared by maximizing capacity, while minimizing a production cost, to ensure long cycle-life characteristics and improve high-voltage characteristics and high-temperature characteristics. When the positive electrode active material is applied to a rechargeable lithium battery, high initial charge/discharge capacity and efficiency may be achieved under high-voltage conditions, long cycle-life characteristics may be realized, and an amount of gas generated due to the high-voltage and high-temperature operation may be effectively suppressed.

### BRIEF DESCRIPTION OF THE DRAWINGS

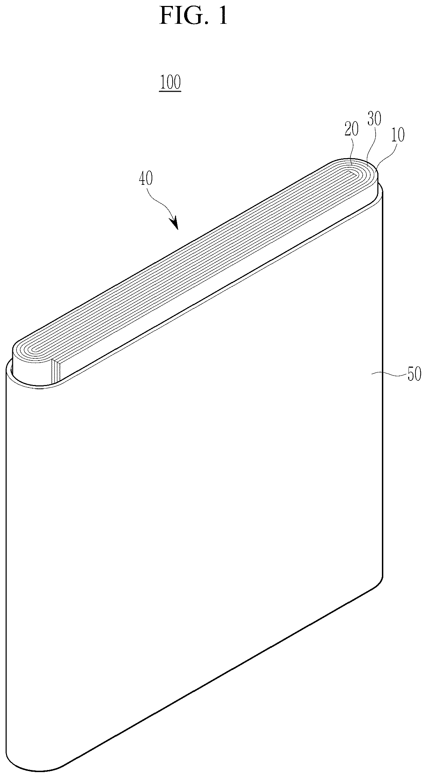

FIG. 1 is a cross-sectional view schematically showing a rechargeable lithium battery according to some embodiments.

### DETAILED DESCRIPTION OF THE EMBODIMENTS

Hereinafter, specific embodiments will be described in detail so that those of ordinary skill in the art can easily implement them. However, this disclosure may be embodied in many different forms and is not construed as limited to the example embodiments set forth herein.

The terminology used herein is used to describe embodiments only, and is not intended to limit the present invention. The singular expression includes the plural expression unless the context clearly dictates otherwise.

As used herein, "combination thereof" means a mixture, laminate, composite, copolymer, alloy, blend, reaction product, and the like of the constituents.

Herein, it should be understood that terms such as "comprises," "includes," or "have" are intended to designate the presence of an embodied feature, number, step, element, or a combination thereof, but it does not preclude the possibility of the presence or addition of one or more other features, numbers, steps, elements, or a combination thereof.

In the drawings, the thickness of layers, films, panels, regions, etc., are exaggerated for clarity and like reference numerals designate like elements throughout the specification. It will be understood that when an element such as a layer, film, region, or substrate is referred to as being "on" another element, it can be directly on the other element or intervening elements may also be present. In contrast, when an element is referred to as being "directly on" another element, there are no intervening elements present.

In addition, "layer" herein includes not only a shape formed on the whole surface when viewed from a plan view, but also a shape formed on a partial surface.

In addition, the average particle diameter may be measured by a method well known to those skilled in the art, for example, may be measured by a particle size analyzer, or may be measured by a transmission electron microscopic image or a scanning electron microscopic image. Alternatively, it is possible to obtain an average particle diameter value by measuring using a dynamic light scattering method, performing data analysis, counting the number of particles for each particle size range, and calculating from this. Unless otherwise defined, the average particle diameter may mean the diameter (D₅₀) of particles having a cumulative volume of 50 volume% in the particle size distribution. As used herein, when a definition is not otherwise provided, the average particle diameter means a diameter (D₅₀) of particles having a cumulative volume of 50 volume% in the particle size distribution that is obtained by measuring the size (diameter or length of the major axis) of about 20 particles at random in a scanning electron microscope image.

Herein, "or" is not to be construed as an exclusive meaning, for example, "A or B" is construed to include A, B, A+B, and the like.

"Metal" is interpreted as a concept including ordinary metals, transition metals and metalloids (semi-metals).

### Positive Electrode Active Material

In some embodiments, a positive electrode active material includes core particles including a lithium nickel-manganese-based composite oxide having a nickel content of greater than or equal to about 60 mol% based on 100 mol% of a total metal excluding lithium, and a coating layer disposed on the surface of the core particles and including Al, Zr, and Mg.

As the price of cobalt, a rare metal, has recently risen sharply, there is a demand for the development of positive electrode active materials that exclude cobalt or reduce its content. Among them, a positive electrode active material having an olivine crystal structure such as lithium iron phosphate (LFP), lithium manganese phosphate (LMP), lithium manganese iron phosphate (LMFP), and the like or a spinel crystal structure such as lithium manganese oxide (LMO) and the like has a limitation in realizing high capacity due to small available lithium capacity within the structure. The layered nickel-manganese positive electrode active material has excellent capacity and efficiency characteristics due to the high available lithium capacity in the structure, making it suitable as a material for high-capacity batteries. However, as cobalt, which plays a key role in the layered structure, is removed, structural stability decreases, resistance increases, and it becomes difficult to secure long cycle-life characteristics. In addition, excluding cobalt, there is a problem that the side reaction between the positive electrode active material and the electrolyte is accelerated under high-voltage and high-temperature conditions, increasing an amount of gas generated and deteriorating the cycle-life characteristics.

In some embodiments, provided is a positive electrode active material in which a layered structure of lithium nickel-manganese-based composite oxide is applied as a core particle while a coating layer including Al, Zr, and Mg is introduced, thereby maximizing capacity and efficiency while minimizing production costs and reducing an amount of gas generated even under high voltage or high temperature conditions to achieve long cycle-life characteristics.

### Core Particles

The core particles include lithium nickel-manganese-based composite oxide, and the nickel content satisfies greater than or equal to about 60 mol% based on 100 mol% of a total metal excluding lithium in the positive electrode active material. The nickel is contained in the core particles, but may move to some of the coating layers during the coating process. Therefore, the nickel content may refer to the nickel content contained in the entire positive electrode active material. The nickel content may be, for example about 60 mol% to about 80 mol%, about 65 mol% to about 80 mol%, about 70 mol% to about 80 mol%, about 60 mol% to about 79 mol%, about 60 mol% to about 78 mol%, or about 60 mol% to about 75 mol% based on 100 mol% of a total metal excluding lithium in the positive electrode active material. If the nickel content satisfies the above range, high capacity can be achieved and structural stability can be increased even if the cobalt content is reduced.

For example, a manganese content may be, for example, about 10 mol% to about 40 mol%, for example, about 10 mol% to about 39 mol%, about 10 mol% to about 35 mol%, about 10 mol% to about 30 mol%, about 10 mol% to about 29 mol%, about 15 mol% to about 39 mol%, about 20 mol% to about 39 mol%, or about 20 mol% to about 30% based on 100 mol% of a total metal excluding lithium in the lithium nickel-manganese-based composite oxide. If the manganese content satisfies the above range, the positive electrode active material may improve structural stability while realizing high capacity.

The lithium nickel-manganese-based composite oxide may be, for example, a lithium nickel-manganese-aluminium-based composite oxide that further includes aluminium in addition to nickel and manganese. When the composite oxide includes aluminium, it is advantageous to maintain a stable layered structure even if the cobalt element is excluded from the structure. The aluminium content based on 100 mol% of the lithium nickel-manganese-aluminium-based composite oxide may be greater than or equal to about 0.1 mol%, greater than or equal to about 0.5 mol%, or greater than or equal to about 1 mol%, for example, about 1 mol% to about 3 mol%, about 1 mol% to about 2.5 mol%, about 1 mol% to about 2 mol%, or about 1 mol% to about 1.9 mol%. If the aluminium content satisfies the above range, a stable layered structure may be maintained even if cobalt is excluded, the problem of structure collapse due to charging and discharging may be suppressed, and long cycle-life characteristics of the positive electrode active material may be realized.

According to some embodiments, the concentration of aluminium within the core particle may be uniform. In other words, it means that there is not a concentration gradient of aluminium from the center to the surface within the core particle, or that the aluminium concentration in the internal portion of the core particle is neither higher nor lower than in the external portion, and that the aluminium within the core particle is evenly distributed. This may be a structure obtained by using aluminium raw materials during precursor production without additional doping of aluminium during the synthesis of the core particles and thereby synthesizing a composite oxide using nickel-manganese-aluminium-based hydroxide as a precursor. The core particle may be in the form of a secondary particle in which a plurality of primary particles are aggregated, and the aluminium content inside the primary particle may be the same or similar regardless of the location of the primary particle. In other words, if a primary particle is selected at a random position in the cross section of a secondary particle and the aluminium content is measured inside the primary particle rather than at its interface, regardless of the location of the primary particle, that is, whether the primary particle is close to the center of the secondary particle or close to the surface, the aluminium content may be the same/similar/uniform. In this structure, a stable layered structure can be maintained even if cobalt is absent or is present in a very small amount, and aluminium by-products or aluminium aggregates are not generated, so that the capacity, efficiency, and cycle-life characteristics of the positive electrode active material can be improved at the same time.

The lithium nickel-manganese-based composite oxide may be specifically represented by Chemical Formula 1.

[Chemical Formula 1] Liₐ₁Niₓ₁Mn_{y1}Al_{z1}M¹_{w1}O_{2-b1}X_{b1}

In Chemical Formula 1, 0.9≤a1≤1.8, 0.6≤x1≤0.8, 0.1 ≤y1≤0.4, 0≤z1≤0.03, 0≤w1≤0.3, 0.9≤x1+y1+z1+w1≤1.1, and 0≤b1≤0.1, M¹ is one or more elements selected from B, Ba, Ca, Ce, Cr, Fe, Mg, Mo, Nb, Si, Sn, Sr, Ti, V, W, Y, and Zr, and X is one or more elements selected from F, P, and S.

In Chemical Formula 1, for example, 0.9≤a1≤1.5, or 0.9≤a1≤1.2. Additionally, Chemical Formula 1 may contain aluminium, in which case 0.6≤x1≤0.8, 0.1≤y1≤0.39, 0.01≤z1≤0.03, and 0≤w1≤0.29 may be satisfied, and, for example, 0.6≤x1≤0.8, 0.1≤y1≤0.39, 0.01≤z1≤0.03, and 0≤w1≤0.29 may be satisfied.

In Chemical Formula 1, for example, 0.6≤x1≤0.79, 0.6≤x1≤0.78, 0.6≤x1≤0.75, 0.65≤x1≤0.8, or 0.7≤x1≤0.79; 0.1≤y1≤0.35, 0.1≤y1≤0.30, 0.1≤y1≤0.29, 0.15≤y1≤0.39, or 0.2≤y1≤0.3; 0.01≤z1≤0.025, 0.01≤z1≤0.02, or 0.01≤z1≤0.019; and 0≤w1≤0.28, 0≤w1≤0.27, 0≤w1≤0.26, 0≤w1≤0.25, 0≤w1≤0.24, 0≤w1≤0.23, 0≤w1≤0.22, 0≤w1≤0.21, 0≤w1≤0.2, 0≤w1≤0.15, 0≤w1≤0.1, or 0≤w1≤0.09.

The lithium nickel-manganese-based composite oxide may be a cobalt-free compound that does not include cobalt or includes a very small amount of cobalt. For example, the lithium nickel-manganese-based composite oxide may have a cobalt content of about 0 mol% to about 0.01 mol% based on 100 mol% of a total metal excluding lithium.

The core particles may be in the form of secondary particles made by aggregating a plurality of primary particles. The secondary particles may be spherical, elliptical, polyhedral, or irregular in shape, and the primary particles may be spherical, elliptical, plate-shaped, or a combination thereof.

The core particles are susceptible to chemical attack from components in the electrolyte when the battery is operated under high voltage or high temperature conditions, and many side reactions with the electrolyte may occur. Accordingly, there is a problem that the battery cycle-life and safety are reduced due to the large amount of gas generated. These problems can be solved by introducing a coating layer according to some embodiments that will be described later.

### Coating Layer

In some embodiments, Al, Zr, and Mg are all included in the coating layer, and compared to the case where any one of the three is excluded, the amount of gas generated under high voltage or high temperature driving conditions can be significantly reduced and the cycle-life characteristics can be improved. The coating layer may include three types of metals or metal cations, including Al³⁺, Zr⁴⁺, and Mg²⁺. By simultaneously coating three types of metal cations with oxidation states of 2+, 3+, and 4+, the charge balance may be increased and the high voltage characteristics may be improved.

The Al content in the coating layer may be about 0.1 mol% to about 2 mol%, for example, about 0.2 mol% to about 1.9 mol%, about 0.3 mol% to about 1.8 mol%, about 0.5 mol% to about 1.5 mol%, or about 0.8 mol% to about 1.3 mol% based on 100 mol% of a total metal excluding lithium in the positive electrode active material. This refers only to the content of aluminium included in the coating layer, separately from the aluminium included within the core particle. The aluminium content in the coating layer can be measured, for example, through SEM-EDS analysis of the surface or cross-section of the positive electrode active material. When the aluminium content in the coating layer satisfies the ranges, the coating layer may have a uniform and thin thickness, which may not increase resistance of the positive electrode active material and effectively suppress a side reaction with the electrolyte and thereby, improve cycle-life characteristics of a rechargeable lithium battery under high-voltage and high-temperature conditions. For example, if the aluminium content of the coating layer is excessive, a uniform coating layer may not be formed or resistance may increase, which may reduce charge/discharge efficiency and cycle-life characteristics, and if the aluminium content of the coating layer is too small, a coating layer of an appropriate thickness is not formed and an effect of suppressing side reactions with the electrolyte may be reduced.

The Zr content of the coating layer may be about 0.1 mol% to about 0.4 mol%, for example, about 0.2 mol% to about 0.4 mol%. Additionally, the Mg content of the coating layer may be about 0.1 mol% to about 0.5 mol%, for example, about 0.1 mol% to about 0.4 mol%. When the coating content of Zr and Mg satisfies the above range, the positive electrode active material forms a good coating layer without reducing capacity or increasing resistance, effectively suppressing side reactions with the electrolyte and effectively reducing the amount of gas generated under high voltage or high temperature conditions.

The ratio of Zr and Mg contents to Al content in the coating layer may be about 0.06 to about 0.65, for example, about 0.1 to about 0.65, about 0.1 to about 0.6, about 0.1 to about 0.5, about 0.1 to about 0.45, about 0.2 to about 0.40, or may be greater than 0.06 and less than about 0.65, or greater than 0.06 and less than about 0.45. This means the content ratio of (Zr+Mg)/AI, and the content may mean molar content. When the content ratio of each element in the coating layer satisfies the above range, capacity characteristics and cycle-life characteristics at high voltage can be maximized.

The coating layer according to some embodiments may be in the form of a film that continuously surrounds the surface of the core particle, for example, may be in the form of a shell that surrounds the entire surface of the core particle. This is distinct from a structure in which only portion of the surface of the core particle is partially coated. According to some embodiments, the coating layer may be formed to entirely cover the surface of the core particle and may be formed to be very thin and uniform in thickness, and therefore the positive electrode active material does not increase resistance or decrease capacity, improves structural stability, effectively suppresses side reactions with electrolytes, reduces the amount of gas generated under high-voltage and high-temperature conditions, and achieves long cycle-life characteristics.

A thickness of the coating layer may be about 5 nm to about 500 nm, for example, about 5 nm to about 450 nm, about 10 nm to about 400 nm, about 20 nm to about 350 nm, about 30 nm to about 300 nm, about 30 nm to about 250 nm, about 30 nm to about 200 nm, about 30 nm to about 150 nm, about 50 nm to about 500 nm, about 80 nm to about 500 nm, or about 100 nm to about 500 nm. When the coating layer satisfies the thickness ranges, the structural stability of the positive electrode active material may be improved without increasing resistance or reducing capacity due to the coating, and the side reaction with the electrolyte may be effectively suppressed. The thickness of the coating layer may be measured through, for example, TOF-SIMS, XPS, or EDS analysis, and the thickness range of the coating layer may be measured through TEM-EDS line profile.

The coating layer according to some embodiments is characterized by being thin and uniform in thickness, at the level of tens to hundreds of nanometers. For example, the deviation in coating layer thickness within one positive electrode active material particle may be less than or equal to about 20%, less than or equal to about 18%, or less than or equal to about 15%. Herein, the deviation in coating layer thickness refers to the coating layer thickness within one positive electrode active material particle. For example, the deviation of the coating layer thickness may be calculated by measuring the thickness of about 10 points in an electron microscope image of the cross-section of a single positive electrode active material particle to calculate an arithmetic average, and then dividing the absolute value of the difference between one data and the arithmetic mean value by the arithmetic mean value and multiplying by 100.

The fact that the deviation or standard deviation of the coating layer thickness satisfies the above range means that a coating layer of uniform thickness is well formed in the form of a film on the surface of the positive electrode active material particle. Accordingly, the structural stability of the positive electrode active material is improved, side reactions with the electrolyte are effectively suppressed, and the increase in resistance or decrease in capacity due to coating can be minimized.

Due to the characteristics of each element in the coating layer, Al may exist in the form of a continuous film, and Zr and Mg may exist in the form of islands.

In some embodiments, Al, Zr, and Mg may each form separate layers. For example, the positive electrode active material according to some embodiments may include a first coating layer disposed on the surface of the core particle and including Al, and a second coating layer disposed on the first coating layer and including Zr and Mg. A first coating layer in the form of a thin film may be formed as aluminium first attaches or is absorbed to the surface of the core particle, and then zirconium and magnesium may be coated on it to form a second coating layer. Of course, Al, Zr, and Mg may be mixed in the first coating layer and the second coating layer, but the first coating layer may be an Al-rich coating layer mainly composed of Al and the second coating layer may be a Zr/Mg-rich coating layer mainly composed of Zr and Mg.

Thicknesses of the first coating layer and the second coating layer are not particularly limited. However, the thickness of the first coating layer may be about 1 nm to about 200 nm, for example, about 10 nm to about 200 nm, about 20 nm to about 200 nm, or about 30 nm to about 180 nm. The thickness of the second coating layer may be about 2 nm to about 300 nm, for example, about 10 nm to about 250 nm, about 20 nm to about 200 nm, about 30 nm to about 300 nm, or about 50 nm to about 300 nm. When each thickness satisfies the above range, the structural stability of the positive electrode active material can be improved without increasing resistance or decreasing capacity due to the coating, and the amount of gas generated during high-voltage and high-temperature operation can be effectively reduced by effectively suppressing side reactions with the electrolyte.

Meanwhile, the coating layer may further include nickel, manganese, or a combination thereof in addition to Al, Zr, and Mg. The nickel and manganese included in the core particles may have been introduced during the coating layer formation process, and their contents are not particularly limited. The coating layer according to some embodiments essentially includes Al, Zr, and Mg while optionally including nickel and manganese, and is formed to be thin and uniform in thickness, thereby improving the high voltage characteristics of the positive electrode active material and improving the cycle-life characteristics.

### Grain Boundary Coating Portion

During the coating layer formation process, aluminium may diffuse into the core particles. Accordingly, the positive electrode active material according to some embodiments may further include a grain boundary coating portion including aluminium and disposed on the surface of the primary particles in the internal portion of the secondary particles. Herein, the secondary particle refers to the core particle, and the internal portion of the secondary particle may mean the entire internal portion excluding the surface of the secondary particle, or may be a region from the surface of the secondary particle to the center of the secondary particle, up to about 60 length% of the radius. The grain boundary coating is a concept that is distinct from the coating layer on the surface of the core particle, and refers to the coating portion formed on the surface of the primary particles inside the core particle. The presence of a grain boundary coating portion can be confirmed through SEM-EDS analysis of the cross-section of the positive electrode active material. By forming the aluminium grain boundary coating portion, the positive electrode active material can become more structurally stable and its cycle-life characteristics can be improved.

The aluminium content in the grain boundary coating portion is not particularly limited, and, for example, the aluminium content in the grain boundary coating portion may be less than the aluminium content in the coating layer.

The grain boundary coating portion may further include magnesium in addition to aluminium. Additionally, the grain boundary coating may further include nickel, manganese, or a combination thereof.

The average particle diameter (D₅₀) of the positive electrode active material according to some embodiments is not particularly limited, but may be, for example, about 10 µm to about 18 µm, about 11 µm to about 16 µm, or about 12 µm to about 15 µm. As used herein, when a definition is not otherwise provided, the average particle diameter means a diameter (D₅₀) of particles having a cumulative volume of 50 volume% in the particle size distribution that is obtained by measuring the size (diameter or length of the major axis) of about 20 particles at random in a scanning electron microscope image for positive electrode active materials. When the average particle diameter of the positive electrode active material satisfies the above range, high capacity and long cycle-life can be realized and it can be advantageous to form a coating layer according to some embodiments.

The cobalt content in the positive electrode active material according to some embodiments may be, for example, less than or equal to about 0.01 mol%, less than or equal to about 0.005 mol%, or less than or equal to about 0.001 mol%, for example, about 0 mol% to about 0.01 mol% based on 100 mol% of a total metal excluding lithium. The positive electrode active material according to some embodiments may be, for example, a cobalt-free positive electrode active material.

Additionally, in some embodiments, another positive electrode active material may be characterized as not including sodium. In general, sodium ions can be used in the preparing process of a positive electrode active material, but according to the preparing method described later, core particles with a stable structure and a coating layer of uniform thickness can be formed without using sodium ions.

### Method of Preparing Positive Electrode Active Material

In some embodiments, a method of preparing a positive electrode active material includes (i) mixing a nickel-manganese-based composite hydroxide having a nickel content of greater than or equal to about 60 mol% based on 100 mol% of a total metal and a lithium raw material and performing a first heat treatment to obtain a lithium nickel-manganese-based composite oxide, (ii) adding the obtained lithium nickel-manganese-based composite oxide to a solution of Al raw material mixed in an aqueous solvent, followed by mixing and drying, (iii) dry mixing the obtained product with a Zr raw material and a Mg raw material and performing a second heat treatment to obtain a positive electrode active material.

The nickel-manganese-based composite hydroxide may not include cobalt or may include a very small amount of cobalt, and may be, for example, a cobalt-free nickel-manganese-based composite hydroxide. For example, it may be a cobalt-free nickel-manganese-aluminium-based composite hydroxide. The nickel-manganese-based composite hydroxide can be prepared by a general coprecipitation method.

The nickel content in the nickel-manganese-based composite hydroxide may be greater than or equal to about 60 mol%, for example, about 60 mol% to about 80 mol%, about 65 mol% to about 80 mol%, about 70 mol% to about 80 mol%, about 60 mol% to about 79 mol%, about 60 mol% to about 78 mol%, or about 60 mol% to about 75 mol%, based on 100 mol% of a total metal. When the nickel content satisfies the above range, high capacity can be achieved and structural stability can be increased even if the cobalt content is reduced.

The manganese content in the nickel-manganese-based composite hydroxide may be about 10 mol% to about 40 mol%, about 10 mol% to about 39 mol%, about 10 mol% to about 35 mol%, about 10 mol% to about 30 mol%, about 10 mol% to about 29 mol%, about 15 mol% to about 39 mol%, about 20 mol% to about 39 mol%, or about 20 mol% to about 30 mol%, based on 100 mol% of a total metal.

In addition, when the nickel-manganese-based composite hydroxide further contains aluminium, the aluminium content may be greater than or equal to about 0.1 mol%, greater than or equal to about 0.5 mol%, or greater than or equal to about 1 mol%, for example, about 1 mol% to about 3 mol%, about 1 mol% to about 2.5 mol%, about 1 mol% to about 2 mol%, or about 1 mol% to about 1.9 mol% based on 100 mol% of a total metal. When the manganese and aluminium contents of the composite hydroxide satisfy the above ranges, high capacity can be realized while structural stability of the positive electrode active material can be increased, and production price can be lowered to increase economic efficiency.

In the nickel-manganese-based composite hydroxide, the cobalt content may be less than or equal to about 0.01 mol%, less than or equal to about 0.005 mol%, or less than or equal to about 0.001 mol% based on 100 mol% of a total metal. This nickel-manganese-based composite hydroxide may be economical as it avoids the increase in unit cost caused by cobalt, maximizes capacity, and improves structural stability.

As an example, the nickel-manganese-based composite hydroxide may be represented by Chemical Formula 2.

[Chemical Formula 2] Niₓ₂Mn_{y2}Al_{z2}M²_{w2}(OH)₂

In Chemical Formula 2, 0.6≤x2≤0.8, 0.1≤y2≤0.4 0≤z2≤0.03, 0≤w2≤0.3, and 0.9≤x2+y2+z2+w2≤1.1, and M² is one or more elements selected from B, Ba, Ca, Ce, Cr, Fe, Mg, Mo, Nb, Si, Sn, Sr, Ti, V, W, Y, and Zr.

In Chemical Formula 2, for example, 0.6≤x2≤0.8, 0.1≤y2≤0.39, 0.01≤z2≤0.03, 0≤w2≤0.29.

The nickel-manganese-based composite hydroxide is in the form of particles, and the average particle diameter (D₅₀) of the particles may be about 10 µm to about 18 µm, about 11 µm to about 16 µm, or about 12 µm to about 15 µm.

In the preparation process of the core particles, aluminium may be additionally doped thereon, but an aluminium raw material is used to prepare a precursor of nickel-manganese-aluminium-based composite hydroxide, in which the aluminium is evenly dispersed in a structure. Such a precursor may be used to prepare a positive electrode active material capable of stably maintaining the layered structure without cobalt despite repeated charges and discharges, in which aluminium byproducts or aluminium aggregates are not formed, resultantly, improving capacity and efficiency characteristics and cycle-life characteristics of the positive electrode active material.

The nickel-manganese-based composite hydroxide and the lithium raw material may be mixed in a mole ratio of about 1:0.9 to about 1:1.8, for example, about 1:0.9 to about 1:1.5 or about 1:0.9 to about 1:1.2. The first heat treatment may be performed under an oxygen atmosphere, for example, within a temperature range of about 750 °C to about 950 °C, about 780 °C to about 900 °C, or about 810 °C to about 890 °C for about 2 hours to about 20 hours or about 4 hours to about 12 hours. Through the heat treatment, lithium nickel-manganese-based composite oxide may be obtained. The obtained composite oxide may include about 60 mol% or more, for example, about 60 mol% to about 80 mol% of nickel based on 100 mol% of a total metal, but cobalt may not be included or included in a very small amount of less than or equal to about 0.01 mol%.

The lithium nickel-manganese-based composite oxide has a significantly different residual lithium content and different surface characteristics from an oxide with other compositions, for example, a conventional nickel-based oxide such as a lithium nickel-cobalt-manganese-based composite oxide or a lithium nickel-cobalt-aluminium-based composite oxide, etc., therefore conventional coating methods may not succeed in forming a good coating layer thereon in the form of a uniform film. In some embodiments, a method is applied to improve high-voltage characteristics by uniformly forming a coating layer with a very thin thickness on the surface of a lithium nickel-manganese-based composite oxide with a very small amount of cobalt and a nickel content of greater than or equal to about 60 mol%.

In some embodiments, the lithium nickel-manganese-based composite oxide obtained through the first heat treatment is mixed by adding it to an aqueous solvent mixed with aluminium raw materials, followed by drying and a second heat treatment, and Al coating is performed in a kind of wet method.

The aqueous solvent may include distilled water, an alcohol-based solvent, or a combination thereof. The aluminium raw material may include, for example, aluminium nitrate, aluminium sulfate, aluminium carbonate, aluminium hydroxide, or a combination thereof. For example, the aluminium raw material may include aluminium sulfate, and in this case, it is advantageous to form a coating layer with a uniform thickness on the surface of the lithium nickel-manganese-based composite oxide particles.

The aluminium raw material is a raw material for forming a coating layer, and the aluminium content in the aluminium raw material may be designed to be about 0.1 mol% to about 2 mol%, for example, about 0.2 mol% to about 1.9 mol%, about 0.3 mol% to about 1.8 mol%, about 0.5 mol% to about 1.5 mol%, or about 0.8 mol% to about 1.3 mol% based on 100 mol% of a total metal excluding lithium in the finally obtained positive electrode active material. If the Al coating content is designed to have the range, the coating layer may be formed to have a thin and uniform thickness of tens or hundreds of nanometers, which may reduce an amount of gas generated of a rechargeable lithium battery under high voltage or high temperature operating conditions and improve high-capacity and long cycle-life characteristics.

A solution obtained by mixing the aluminium raw materials in an aqueous solvent may have a pH of about 1.5 to about 3.5, for example, about 2.0 to about 3.4, about 2.5 to about 3.3, about 2.7 to about 3.3, or about 2.9 to about 3.2. Dropping and mixing the lithium nickel-manganese-based composite oxide into an aqueous solvent mixed with aluminium raw materials may proceed for about 5 minutes to about 80 minutes, about 5 minutes to about 60 minutes, or about 5 minutes to about 40 minutes. After the stirring, the mixed solution may have pH of about 4.5 to about 8.5, for example, about 5.0 to about 8.0, about 5.5 to about 7.5, or about 6.0 to about 7.0. When these conditions are satisfied, it is advantageous to form a coating layer with a uniform thickness.

Drying after the mixing process can be understood as a process of removing the solvent and can be carried out, for example, at about 40 °C to about 240 °C, about 100 °C to about 220 °C, or about 150 °C to about 200 °C.

The second heat treatment may be understood as a process of forming an Al/Zr/Mg coating layer, and may be performed, for example, in an oxygen atmosphere at a temperature range of about 700 °C to about 850 °C, about 750 °C to about 840 °C, or about 800 °C to about 830 °C for about 2 hours to about 20 hours, or about 3 to about 10 hours. Additionally, the second heat treatment temperature may be lower than the first heat treatment temperature, and the second heat treatment time may be the same as or shorter than the first heat treatment time. The desired coating layer can be obtained by performing a second heat treatment under these conditions.

The Zr content in the Zr raw material may be designed to be about 0.1 mol% to about 0.4 mol%, or about 0.2 mol% to about 0.4 mol%, based on 100 mol% of a total metal excluding lithium in the positive electrode active material. Additionally, the Mg content in the Mg raw material may be designed to be about 0.1 mol% to about 0.5 mol%, or about 0.1 mol% to about 0.4 mol%, based on 100 mol% of a total metal excluding lithium in the positive electrode active material.

The Zr raw material may include, for example, zirconium oxide, zirconium silicate, or a combination thereof. The Mg raw material may include, for example, magnesium oxide, magnesium phosphate, magnesium carbonate, or a combination thereof.

### Positive Electrode

In some embodiments, a positive electrode includes a positive electrode current collector and a positive electrode active material layer on the positive electrode current collector, wherein the positive electrode active material layer includes the aforementioned positive electrode active material. The positive electrode active material layer may further include other types of positive electrode active materials in addition to the positive electrode active materials described above. Additionally, the positive electrode active material layer may optionally further include a binder, a conductive material, or a combination thereof.

According to some embodiments, a loading level of the positive electrode active material layer may be about 5 mg/cm² to about 40 mg/cm², for example, about 5 mg/cm² to about 30 about mg/cm², about 10 mg/cm² to about 20 mg/cm², or about 10±5 mg/cm²

Additionally, a density of the positive electrode active material layer in the final compressed positive electrode may be about 3.3 g/cc to about 3.7 g/cc, for example, about 3.3 g/cc to about 3.6 g/cc, or about 3.4 g/cc to about 3.58 g/cc. When applying the positive electrode active material according to some embodiments, it is advantageous to implement such a loading level and positive electrode density, and a positive electrode that satisfies the loading level and positive electrode density in the above range is suitable for implementing a high-capacity, high-energy-density rechargeable lithium battery.

### Binder

The binder improves binding properties of positive electrode active material particles with one another and with a current collector. Examples of binders may include polyvinyl alcohol, carboxymethyl cellulose, hydroxypropyl cellulose, diacetyl cellulose, polyvinyl chloride, carboxylated polyvinyl chloride, polyvinyl fluoride, an ethylene oxide-containing polymer, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, or nylon, but are not limited thereto.

### Conductive Material

The conductive material is included to provide electrode conductivity and any electrically conductive material may be used as a conductive material unless it causes a chemical change. Examples of the conductive material may include a carbon-based material such as natural graphite, artificial graphite, carbon black, acetylene black, ketjen black, a carbon fiber, a carbon nanofiber, a carbon nanotube, and the like; a metal-based material of a metal powder or a metal fiber including copper, nickel, aluminium, silver, and the like; a conductive polymer such as a polyphenylene derivative; or a mixture thereof.

Each content of the binder and the conductive material may be about 0.5 wt% to about 5 wt%, based on 100 wt% of the positive electrode active material layer.

The positive electrode current collector may include Al, but is not limited thereto.

### Rechargeable Lithium Battery

Some embodiments provide a rechargeable lithium battery including the aforementioned positive electrode, a negative electrode, and an electrolyte.

The rechargeable lithium battery may be classified into cylindrical, prismatic, pouch, coin, etc. depending on the shape. FIG. 1 is a schematic view showing a rechargeable lithium battery according to some embodiments. Referring to FIG. 1, a rechargeable lithium battery 100 includes an electrode assembly 40 with a separator 30 interposed between the positive electrode 10 and the negative electrode 20, and a case 50 in which the electrode assembly 40 is housed. The positive electrode 10, the negative electrode 20, and the separator 30 may be impregnated with an electrolyte solution (not shown).

The rechargeable lithium battery according to some embodiments may be rechargeable at a high voltage, or may be suitable for being driven at a high voltage. For example, the charging voltage of the rechargeable lithium battery may be greater than or equal to about 4.45 V, about 4.45 V to about 4.7 V, about 4.45 V to about 4.6 V, or about 4.45 V to about 4.55 V. By applying the positive electrode active material according to some embodiments, the rechargeable lithium battery can significantly reduce an amount of gas generated even when charged at high voltage and can achieve high capacity and long cycle-life characteristics.

### Negative Electrode

The negative electrode may include a current collector and a negative electrode active material layer on the current collector, and may further include a negative electrode active material, a binder, a conductive material, or a combination thereof.

### Negative Electrode Active Material

The negative electrode active material may include a material that reversibly intercalates/deintercalates lithium ions, a lithium metal, a lithium metal alloy, a material capable of doping/dedoping lithium, or transition metal oxide.

The material that reversibly intercalates/deintercalates lithium ions may include, for example, crystalline carbon, amorphous carbon, or a combination thereof as a carbon-based negative electrode active material. The crystalline carbon may be irregular, or sheet, flake, spherical, or fiber shaped natural graphite or artificial graphite. The amorphous carbon may be a soft carbon, a hard carbon, a mesophase pitch carbonization product, calcined coke, and the like.

The lithium metal alloy includes an alloy of lithium and a metal selected from Na, K, Rb, Cs, Fr, Be, Mg, Ca, Sr, Si, Sb, Pb, In, Zn, Ba, Ra, Ge, Al, and Sn.

The material capable of doping/dedoping lithium may be a Si-based negative electrode active material or a Sn-based negative electrode active material. The Si-based negative electrode active material may include silicon, a silicon-carbon composite, SiOₓ (0 < x < 2), a Si-Q alloy (wherein Q is an element selected from an alkali metal, an alkaline-earth metal, a Group 13 element, a Group 14 element (excluding Si), a Group 15 element, a Group 16 element, a transition metal, a rare earth element, and a combination thereof, for example, Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, TI, Ge, P, As, Sb, Bi, S, Se, Te, Po, and a combination thereof), or a combination thereof. The Sn-based negative electrode active material may be Sn, SnO₂, a Sn alloy, or a combination thereof.

The silicon-carbon composite may be a composite of silicon and amorphous carbon. An average particle diameter (D₅₀) of the silicon-carbon composite particles may be, for example, about 0.5 µm to about 20 µm. According to some embodiments, the silicon-carbon composite may be in the form of silicon particles and amorphous carbon coated on the surface of the silicon particles. For example, it may include a secondary particle (core) in which silicon primary particles are assembled and an amorphous carbon coating layer (shell) on the surface of the secondary particle. The amorphous carbon may also be present between the silicon primary particles, for example, the silicon primary particles may be coated with amorphous carbon. The secondary particles may exist dispersed in an amorphous carbon matrix.

The silicon-carbon composite may further include crystalline carbon. For example, the silicon-carbon composite may include a core including crystalline carbon and silicon particles and an amorphous carbon coating layer on the surface of the core. The crystalline carbon may be artificial graphite, natural graphite, or a combination thereof. The amorphous carbon may include soft carbon or hard carbon, a mesophase pitch carbonized product, and calcined coke.

When the silicon-carbon composite includes silicon and amorphous carbon, a content of silicon may be about 10 wt% to about 50 wt% and a content of amorphous carbon may be about 50 wt% to about 90 wt% based on 100 wt% of the silicon-carbon composite. In addition, when the composite includes silicon, amorphous carbon, and crystalline carbon, a content of silicon may be about 10 wt% to about 50 wt%, a content of crystalline carbon may be about 10 wt% to about 70 wt%, and a content of amorphous carbon may be about 20 wt% to about 40 wt% based on 100 wt% of the silicon-carbon composite.

Additionally, a thickness of the amorphous carbon coating layer may be about 5 nm to about 100 nm. An average particle diameter (D₅₀) of the silicon particles (primary particles) may be about 10 nm to about 1 µm, or about 10 nm to about 200 nm. The silicon particles may exist as silicon alone, in the form of a silicon alloy, or in an oxidized form. The oxidized form of silicon may be represented by SiOₓ (0<x<2). At this time, the atomic content ratio of Si:O, which indicates a degree of oxidation, may be about 99:1 to about 33:67. As used herein, when a definition is not otherwise provided, an average particle diameter (D₅₀) indicates a particle where an accumulated volume is about 50 volume% in a particle distribution.

The Si-based negative electrode active material or Sn-based negative electrode active material may be mixed with the carbon-based negative electrode active material. When the Si-based negative electrode active material or Sn-based negative electrode active material and the carbon-based negative electrode active material are mixed and used, the mixing ratio may be a weight ratio of about 1:99 to about 90:10.

### Binder

The binder serves to well adhere the negative electrode active material particles to each other and also to adhere the negative electrode active material to the current collector. The binder may be a non-aqueous binder, an aqueous binder, a dry binder, or a combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may include a styrene-butadiene rubber, a (meth)acrylated styrene-butadiene rubber, a (meth)acrylonitrile-butadiene rubber, a (meth)acrylic rubber, butyl rubber, a fluorine rubber, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, or a combination thereof.

When an aqueous binder is used as the negative electrode binder, a cellulose-based compound capable of imparting viscosity may be further included. As the cellulose-based compound, one or more of carboxymethyl cellulose, hydroxypropylmethyl cellulose, methyl cellulose, or alkali metal salts thereof may be mixed and used. The alkali metal may be Na, K, or Li.

The dry binder may be a polymer material capable of becoming fiber, and may be, for example, polytetrafluoroethylene, polyvinylidene fluoride, a polyvinylidene fluoride-hexafluoropropylene copolymer, polyethylene oxide, or a combination thereof.

### Conductive Material

The conductive material is included to provide electrode conductivity and any electrically conductive material may be used as a conductive material unless it causes a chemical change. Examples of the conductive material include a carbon-based material such as natural graphite, artificial graphite, carbon black, acetylene black, ketjen black, a carbon fiber, a carbon nanofiber, a carbon nanotube, and the like; a metal-based material of a metal powder or a metal fiber including copper, nickel, aluminium, silver, and the like; a conductive polymer such as a polyphenylene derivative; or a mixture thereof.

A content of the negative electrode active material may be about 95 wt% to about 99.5 wt% based on 100 wt% of the negative electrode active material layer, and a content of the binder may be about 0.5 wt% to about 5 wt% based on 100 wt% of the negative electrode active material layer. For example, the negative electrode active material layer may include about 90 wt% to about 99 wt% of the negative electrode active material, about 0.5 wt% to about 5 wt% of the binder, and about 0.5 wt% to about 5 wt% of the conductive material.

### Current Collector

The negative electrode current collector may include, for example, indium (In), copper (Cu), magnesium (Mg), stainless steel, titanium (Ti), iron (Fe), cobalt (Co), nickel (Ni), zinc (Zn), aluminium (Al), germanium (Ge), lithium (Li), or an alloy thereof, and may be in the form of a foil, sheet, or foam. A thickness of the negative electrode current collector may be, for example, about 1 µm to about 20 µm, about 5 µm to about 15 µm, or about 7 µm to about 10 µm.

### Electrolyte

For example, the electrolyte for a rechargeable lithium battery may be an electrolyte, which may include a non-aqueous organic solvent and a lithium salt.

The non-aqueous organic solvent serves as a medium for transmitting ions taking part in the electrochemical reaction of a battery. The non-aqueous organic solvent may be a carbonate-based, ester-based, ether-based, ketone-based, or alcohol-based solvent, an aprotic solvent, or a combination thereof.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like. The ester-based solvent may include methyl acetate, ethyl acetate, n-propyl acetate, dimethyl acetate, methyl propionate, ethyl propionate, decanolide, mevalonolactone, valerolactone, caprolactone, and the like. The ether-based solvent may include dibutyl ether, tetraglyme, diglyme, dimethoxyethane, 2-methyltetrahydrofuran, 2,5-dimethyltetrahydrofuran, tetrahydrofuran, and the like. In addition, the ketone-based solvent may include cyclohexanone, and the like. The alcohol-based solvent may include ethanol, isopropyl alcohol, and the like and the aprotic solvent may include nitriles such as R-CN (wherein R is a C2 to C20 linear, branched, or cyclic hydrocarbon group, a double bond, an aromatic ring, or an ether bond, and the like); amides such as dimethylformamide; dioxolanes such as 1,3-dioxolane, 1,4-dioxolane, and the like; sulfolanes, and the like.

The non-aqueous organic solvent can be used alone or in a mixture of two or more types, and when two or more types are used in a mixture, a mixing ratio can be appropriately adjusted according to the desired battery performance, which is widely known to those working in the field.

When using a carbonate-based solvent, a cyclic carbonate and a chain carbonate may be mixed and used, and the cyclic carbonate and the chain carbonate may be mixed in a volume ratio of about 1:1 to about 1:9.

The non-aqueous organic solvent may further include an aromatic hydrocarbon-based organic solvent. For example, a carbonate-based solvent and an aromatic hydrocarbon-based organic solvent may be mixed and used in a volume ratio of about 1:1 to about 30:1.

The electrolyte may further include vinylethyl carbonate, vinylene carbonate, or an ethylene carbonate-based compound to improve battery cycle-life.

Examples of the ethylene carbonate-based compound may include fluoroethylene carbonate, difluoroethylene carbonate, chloroethylene carbonate, dichloroethylene carbonate, bromoethylene carbonate, dibromoethylene carbonate, nitroethylene carbonate, and cyanoethylene carbonate.

The lithium salt dissolved in the organic solvent supplies lithium ions in a battery, enables a basic operation of a rechargeable lithium battery, and improves transportation of the lithium ions between positive and negative electrodes. Examples of the lithium salt may include at least one selected from LiPF₆, LiBF₄, LiSbF₆, LiAsF₆, LiClO₄, LiAlO₂, LiAlCl₄, LiPO₂F₂, LiCl, Lil, LiN(SO₃C₂F₅)₂, Li(FSO₂)₂N (lithium bis(fluorosulfonyl)imide; LiFSI), LiC₄F₉SO₃, LiN(CₓF₂ₓ₊₁SO₂)(C_{y}F_{2y+1}SO₂) (wherein x and y are integers of 1 to 20), lithium trifluoromethane sulfonate, lithium tetrafluoroethanesulfonate, lithium difluorobis(oxalato)phosphate (LiDFBOP), and lithium bis(oxalato) borate (LiBOB).

A concentration of lithium salt may be within the range of about 0.1 M to about 2.0 M. When the concentration of lithium salt is within the above range, the electrolyte has appropriate ionic conductivity and viscosity, and thus excellent performance can be achieved and lithium ions can move effectively.

### Separator

Depending on the type of the rechargeable lithium battery, a separator may be present between the positive electrode and the negative electrode. The separator may include polyethylene, polypropylene, polyvinylidene fluoride, or a multilayer film of two or more layers thereof, and a mixed multilayer film such as a polyethylene/polypropylene two-layer separator, polyethylene/polypropylene/polyethylene three-layer separator, polypropylene/polyethylene/polypropylene three-layer separator, and the like.

The separator may include a porous substrate and a coating layer including an organic material, an inorganic material, or a combination thereof on one or both surfaces of the porous substrate.

The porous substrate may be a polymer film formed of any one polymer selected from polyolefin such as polyethylene and polypropylene, polyester such as polyethylene terephthalate and polybutylene terephthalate, polyacetal, polyamide, polyimide, polycarbonate, polyether ketone, polyarylether ketone, polyether ketone, polyetherimide, polyamideimide, polybenzimidazole, polyethersulfone, polyphenylene oxide, a cyclic olefin copolymer, polyphenylene sulfide, polyethylene naphthalate, a glass fiber, TEFLON, and polytetrafluoroethylene, or a copolymer or mixture of two or more thereof.

The porous substrate may have a thickness of about 1 µm to about 40 µm, for example, about 1 µm to about 30 µm, about 1 µm to about 20 µm, about 5 µm to about 15 µm, or about 10 µm to about 15 µm.

The organic material may include a (meth)acryl-based copolymer including a first structural unit derived from (meth)acrylamide, and a second structural unit including at least one of a structural unit derived from (meth)acrylic acid or (meth)acrylate, and a structural unit derived from (meth)acrylamidosulfonic acid or a salt thereof.

The inorganic material may include inorganic particles selected from Al₂O₃, SiO₂, TiO₂, SnO₂, CeO₂, MgO, NiO, CaO, GaO, ZnO, ZrO₂, Y₂O₃, SrTiOs, BaTiOs, Mg(OH)₂, boehmite, and a combination thereof, but is not limited thereto. An average particle diameter (D₅₀) of the inorganic particles may be about 1 nm to about 2000 nm, for example, about 100 nm to about 1000 nm, or about 100 nm to about 700 nm.

The organic material and the inorganic material may be mixed in one coating layer, or a coating layer including an organic material and a coating layer including an inorganic material may be stacked.

The thickness of the coating layer may be about 0.5 µm to about 20 µm, for example, about 1 µm to about 10 µm, or about 1 µm to about 5 µm.

Examples and comparative examples of the present disclosure are described below. However, the following examples are only examples of the present disclosure, and the present disclosure is not limited to the following examples.

### Example 1

### 1. Preparation of Positive Electrode Active Material

Ni_{0.75}Mn_{0.23}Al_{0.02}(OH)₂ and LiOH were mixed in a mole ratio of 1:1.05 and then, primarily heat-treated at 850 °C under an oxygen atmosphere for 8 hours to prepare composite oxide in the form of secondary particles having a composition of Li_{1.05}Ni_{0.75}Mn_{0.23}Al_{0.02}O₂ and an average particle diameter (D₅₀) of about 14 µm.

After mixing aluminium sulfate with a distilled water solvent, the composite oxide was added thereto and then, mixed for 20 minutes to 60 minutes. Herein, an aluminium content in the aluminium sulfate was designed to be 1.0 mol% based on 100 mol% of a total metal excluding lithium in a positive electrode active material. After removing the solvent from the mixed solution and then, drying the rest at 190°C, zirconium oxide powder and magnesium oxide powder were dry-mixed therewith and then, secondarily heat-treated at 825 °C for 8 hours under an oxygen atmosphere to obtain the final positive electrode active material. Herein, a zirconium content in the zirconium oxide was designed to be 0.2 mol% based on 100 mol% of a total metal excluding lithium in the final positive electrode active material, and a magnesium content in the magnesium oxide was designed to be 0.1 mol% based on 100 mol% of a total metal excluding lithium in the final positive electrode active material.

### 2. Manufacture of Rechargeable Lithium Battery Cell

98.5 wt% of the positive electrode active material, 1.0 wt% of a polyvinylidene fluoride binder, and 0.5 wt% of a carbon nanotube conductive material were mixed to prepare positive electrode active material layer slurry, and the slurry was coated on an aluminium foil current collector and then, dried and compressed to manufacture a positive electrode. At this time, a loading level of the positive electrode active material layer was 10 mg/cm², and the density of the final rolled positive electrode was about 3.4 g/cc.

97.5 wt% of a graphite negative electrode active material, 1.5 wt% of carboxymethyl cellulose, and 1 wt% of a styrene butadiene rubber in a water solvent were mixed to prepare a negative electrode active material layer slurry. The negative electrode active material layer slurry was coated on a copper foil current collector and then, dried and compressed to manufacture a negative electrode.

A polytetrafluoroethylene separator was used, and an electrolyte prepared by dissolving 1 M LiPF₆ in a mixed solvent of ethylene carbonate and dimethyl carbonate in a volume ratio of 3:7 was used to manufacture a rechargeable lithium battery cell in a common method.

### Example 2

A positive electrode active material and a rechargeable lithium battery cell were manufactured substantially in the same manner as in Example 1 except that the magnesium content in the magnesium oxide was designed to be 0.2 mol% based on 100 mol% of a total metal excluding lithium in the final positive electrode active material.

### Example 3

A positive electrode active material and a rechargeable lithium battery cell were manufactured substantially in the same manner as in Example 1 except that the magnesium content in the magnesium oxide was designed to be 0.4 mol% based on 100 mol% of a total metal excluding lithium in the final positive electrode active material.

### Example 4

A positive electrode active material and a rechargeable lithium battery cell were manufactured substantially in the same manner as in Example 2 except that the zirconium content in the zirconium oxide was designed to be 0.4 mol% based on 100 mol% of a total metal excluding lithium in the final positive electrode active material.

### Comparative Example 1

A positive electrode active material and a rechargeable lithium battery cell were manufactured substantially in the same manner as in Example 1 except that the positive electrode active material was prepared without the Mg coating by not adding the magnesium oxide powder.

### Comparative Example 2

A positive electrode active material was prepared substantially in the same manner as in Example 1 except that aluminium was dry-coated without the coating Zr and Mg. In other words, the composite oxide in the form of secondary particles with a composition of Li_{1.05}Ni_{0.75}Mn_{0.23}Al_{0.02}O₂ was mixed with the aluminium oxide powder and then, heat-treated at 825 °C for 8 hours under an oxygen atmosphere to manufacture a positive electrode active material dry-coated with Al. Except that this was used as a positive electrode active material, a rechargeable lithium battery cell was manufactured substantially in the same manner as in Example 1.

### Comparative Example 3

Ni_{0.75}Mn_{0.25}(OH)₂, LiOH, and Al₂O₃ were mixed in a mole ratio of 1:1:0.02 and then, heat-treated at 850 °C for 8 hours under an oxygen atmosphere to manufacture composite oxide doped with aluminium in the form of secondary particles having an average particle diameter (D₅₀) of about 14 µm. The aluminium-doped composite oxide was mixed with aluminium oxide powder and then, secondarily heat-treated at 825 °C for 8 hours under an oxygen atmosphere to manufacture an Al-coated positive electrode active material. Except that this was used as a positive electrode active material, a rechargeable lithium battery cell was manufactured substantially in the same manner as in Example 1.

### Comparative Example 4

Ni_{0.75}Mn_{0.25}(OH)₂, LiOH, and Al₂O₃ were mixed in a mole ratio of 1:1:0.02 and heat-treated at 850 °C for 8 hours under an oxygen atmosphere to manufacture composite oxide doped with aluminium in the form of secondary particles having an average particle diameter (D₅₀) of about 14 µm. Except that this was used as a positive electrode active material, a rechargeable lithium battery cell was manufactured substantially in the same manner as in Example 1.

### Comparative Example 5

Ni_{0.75}Mn_{0.25}(OH)₂ and LiOH were used in a mole ratio of 1:1 and heat-treated at 850 °C for 8 hours under an oxygen atmosphere to manufacture composite oxide in the form of secondary particles having a composition of LiNi_{0.75}Mn_{0.25}O₂ and an average particle diameter (D₅₀) of about 14 µm. Except that this was used as a positive electrode active material, a rechargeable lithium battery cell was manufactured substantially in the same manner as in Example 1.

For better understanding, the designs of the positive electrode active materials of the examples and the comparative examples are briefly shown in Table 1.

**(Table 1)**

| | P recur sor compo sition (Ni:Mn :Al) | Al additio nal doping (mol%) | Al coati ng (mol %) | Al coa ting met hod | Zr coati ng (mol %) | Mg coa ting (mo l%) | Initial charg e (mAh /g) | Initial disch arge (mAh /g) | Initial effici ency (%) | Cycl e-life (%) | Amo unt of gas gene rated (mL/ g) |
|---|---|---|---|---|---|---|---|---|---|---|---|
| Ex. 1 | 75:23: 02 | - | 1.0 | wet | 0.2 | 0.1 | 228.6 | 194.5 | 85.1 | 98.4 | - |
| Ex. 2 | 75:23: 02 | - | 1.0 | wet | 0.2 | 0.2 | 228.5 | 194.0 | 84.9 | 98.9 | 1.53 |
| Ex. 3 | 75:23: 02 | - | 1.0 | wet | 0.2 | 0.4 | 228.5 | 193.1 | 84.5 | 98.7 | - |
| Ex. 4 | 75:23: 02 | - | 1.0 | wet | 0.4 | 0.2 | 227.7 | 191.3 | 84.0 | 97.8 | - |
| Comp. Ex. 1 | 75:23: 02 | - | 1.0 | wet | 0.2 | - | 228.6 | 194.7 | 85.2 | 95.3 | 2.23 |
| Comp. Ex. 2 | 75:23: 02 | - | 1.0 | dry | - | - | 229.7 | 195.6 | 85.2 | 75.1 | 2.59 |
| Comp. Ex. 3 | 75:25 | 2 | 1.0 | dry | - | - | 227.8 | 190.2 | 83.5 | 65.7 | 3.02 |
| Comp. Ex. 4 | 75:25 | 2 | - | - | - | - | 229.4 | 193.9 | 84.5 | 61.6 | 4.77 |
| Comp. Ex. 5 | 75:25 | - | - | - | - | - | 230.4 | 195.0 | 84.6 | 40.9 | 6.89 |

### Evaluation Example 1: Evaluation of Initial Charge/discharge Capacity and Efficiency

The rechargeable lithium battery cells according to Examples 1 to 4 and Comparative Examples 1 to 5 were constant current-charged to 4.45 V at 0.2 C and constant voltage-charged to 0.05 C and then, discharged to a cut-off voltage of 3.0 V at 0.2 C at 25 °C as initial charge and discharge. Table 1 shows initial charge capacity, initial discharge capacity, and a ratio of the latter to the former as efficiency.

### Evaluation Example 2: Cycle-life Characteristics

After the initial charge and discharge of Evaluation Example 1, each of the cells was 25 times repeatedly charged and discharged at 1.0 C within a voltage range of 3.0 V to 4.45 V to calculate a ratio of 25^{th} cycle discharge capacity to the initial discharge capacity, and the results are shown in Table 1.

### Evaluation Example 3: Evaluation of Amount of Gas Generated

The cells of Example 2 and Comparative Examples 1 to 5 were initially charged at 4.45 V as in Evaluation Example 1 and stored at 90 °C for 4 hours to measure an amount of gas generated, and the results are shown in Table 1.

Referring to Table 1, Examples 1 to 4 exhibited improved cycle-life characteristics, while maintaining high initial charge and discharge capacity and efficiency under the high-voltage conditions, and a significantly reduced amount of gas generated under the high-voltage conditions.

Comparative Example 1, in which the Mg coating was omitted, exhibited slightly reduced cycle-life characteristics at a high voltage and also, a higher amount of gas generated at a high temperature than the examples. Comparative Example 2, in which Al was dry-coated without the Zr and Mg coating, exhibited significantly deteriorated cycle-life characteristics at a high voltage and also, a higher amount of gas generated at a high temperature than the examples. Comparative Example 3, in which core particles were synthesized by separately dry-coating Al without the Zr and Mg coating, exhibited significantly deteriorated discharge capacity and charge/discharge efficiency at a high voltage, a significantly low cycle-life characteristics, and a high amount of gas generated at a high temperature. Comparative Example 4, in which core particles were synthesized by separately coating Al without the Al, Zr, and Mg coating, exhibited deteriorated cycle-life characteristics at a high voltage and a significantly high amount of gas generated at a high temperature. Comparative Example 5, in which Al was not introduced into the core particles without the Al, Zr, and Mg coating, exhibited significantly deteriorated cycle-life characteristics at a high voltage and too high an amount of gas generated at a high temperature to be commercially available.

While this invention has been described in connection with what is presently considered to be practical example embodiments, it is to be understood that the invention is not limited to the disclosed embodiments. On the contrary, it is intended to cover various modifications and equivalent arrangements included within the scope of the appended claims.

Embodiments are set out in the following clauses:
Clause 1. A positive electrode active material, comprising
   core particles including a lithium nickel-manganese-based composite oxide having a nickel content of greater than or equal to about 60 mol% based on 100 mol% of a total metal excluding lithium, and
   a coating layer disposed on the surface of the core particles and including Al, Zr, and Mg.
Clause 2. The positive electrode active material of clause 1, wherein
   an Al content of the coating layer is about 0.1 mol% to about 2 mol%, a Zr content of the coating layer is about 0.1 mol% to about 0.4 mol%, and an Mg content of the coating layer is about 0.1 mol% to about 0.5 mol%, based on 100 mol% of a total metal excluding lithium.
Clause 3. The positive electrode active material of clause 1 or clause 2, wherein
   a ratio of Zr and Mg contents to an Al content in the coating layer is about 0.1 to about 0.65.
Clause 4. The positive electrode active material of any one of clauses 1 to 3, wherein
   the coating layer is in a form of a shell that continuously surrounds the surface of the core particles.
Clause 5. The positive electrode active material of any one of clauses 1 to 4, wherein
   the coating layer has a thickness of about 5 nm to about 500 nm.
Clause 6. The positive electrode active material of any one of clauses 1 to 5, wherein
   the coating layer further includes nickel, manganese, or a combination thereof.
Clause 7. The positive electrode active material of any one of clauses 1 to 6, wherein
   the lithium nickel-manganese-based composite oxide of the core particle has a nickel content of about 60 mol% to about 80 mol% based on 100 mol% of a total metal excluding lithium.
Clause 8. The positive electrode active material of any one of clauses 1 to 7, wherein
   the lithium nickel-manganese-based composite oxide of the core particle is a lithium nickel-manganese-aluminium-based composite oxide that further includes aluminium in addition to nickel and manganese, and
   an aluminium content in the lithium nickel-manganese-aluminium-based composite oxide is about 1 mol% to about 3 mol% based on 100 mol% of a total metal excluding lithium.
Clause 9. The positive electrode active material of any one of clauses 1 to 8, wherein
   the lithium nickel-manganese-based composite oxide of the core particle is represented by Chemical Formula 1:

      [Chemical Formula 1] Liₐ₁Niₓ₁Mn_{y1}Al_{z1}M¹_{w1}0_{2-b1}X_{b1}
   wherein, in Chemical Formula 1, 0.9≤a1≤1.8, 0.6≤x1≤0.8, 0.1≤y1≤0.4, 0≤z1≤0.03, 0≤w1≤0.3, 0.9≤x1+y1+z1+w1≤1.1, and 0≤b1≤0.1, M¹ is one or more elements selected from B, Ba, Ca, Ce, Cr, Fe, Mg, Mo, Nb, Si, Sn, Sr, Ti, V, W, Y, and Zr, and X is one or more elements selected from F, P, and S.
Clause 10. The positive electrode active material of clause 9, wherein
   in Chemical Formula 1, 0.6≤x1≤0.8, 0.1≤y1≤0.39, 0.01≤z1≤0.03, and 0≤w1≤0.29.
Clause 11. The positive electrode active material of any one of clauses 1 to 10, wherein
   a cobalt content is about 0 mol% to about 0.01 mol% based on 100 mol% of a total metal excluding lithium.
Clause 12. The positive electrode active material of any one of clauses 1 to 11, wherein
   the core particles are in the form of secondary particles made by aggregating a plurality of primary particles.
Clause 13. The positive electrode active material of clause 12, wherein
   the positive electrode active material further includes a grain boundary coating portion including Al and disposed on the surfaces of primary particles in an internal portion of the secondary particles.
Clause 14. The positive electrode active material of clause 13, wherein
   an Al content in the grain boundary coating portion is less than an Al content in the coating layer.
Clause 15. The positive electrode active material of clause 13 or clause 14, wherein
   the grain boundary coating portion further includes Mg.
Clause 16. The positive electrode active material of any one of clauses 1 to 15, wherein
   the positive electrode active material has an average particle diameter (D₅₀) of about 10 µm to about 18 µm.
Clause 17. The positive electrode active material of any one of clauses 1 to 16, wherein
   the positive electrode active material does not include sodium.
Clause 18. A method of preparing a positive electrode active material, comprising
   mixing a nickel-manganese-based composite hydroxide having a nickel content of greater than or equal to about 60 mol% based on 100 mol% of a total metal and a lithium raw material and performing a first heat treatment to obtain a lithium nickel-manganese-based composite oxide,
   adding the obtained lithium nickel-manganese-based composite oxide to a solution of Al raw material mixed in an aqueous solvent, followed by mixing and drying, and
   dry mixing the obtained product with a Zr raw material and a Mg raw material and performing a second heat treatment to obtain a positive electrode active material.
Clause 19. The method of clause 18, wherein
   an Al content in the Al raw material is about 0.1 mol% to about 2 mol% based on 100 mol% of a total metal excluding lithium in the positive electrode active material,
   a Zr content in the Zr raw material is about 0.1 mol% to about 0.4 mol% based on 100 mol% of a total metal excluding lithium in the positive electrode active material, and
   a Mg content in the Mg raw material is about 0.1 mol% to about 0.5 mol% based on 100 mol% of a total metal excluding lithium in the positive electrode active material.
Clause 20. The method of clause 18 or clause 19, wherein
   the Al raw material includes aluminium nitrate, aluminium sulfate, aluminium carbonate, aluminium hydroxide, or a combination thereof,
   the Zr raw material includes zirconium oxide, zirconium silicate, or a combination thereof, and
   the Mg raw material includes magnesium oxide, magnesium phosphate, magnesium carbonate, or a combination thereof.
Clause 21. The method of any one of clauses 18 to 20, wherein
   the solution in which the aluminium raw material is mixed in the aqueous solvent has a pH of about 1.5 to about 3.5.
Clause 22. The method of any one of clauses 18 to 21, wherein
   the first heat treatment is performed at about 750 °C to about 950 °C, and
   the second heat treatment is performed at about 700 °C to about 850 °C.
Clause 23. The method of any one of clauses 18 to 22, wherein
   the nickel-manganese-based composite hydroxide is a nickel-manganese-aluminium-based composite hydroxide that further includes aluminium, and an aluminium content in the lithium nickel-manganese-aluminium-based composite hydroxide is about 1 mol% to about 3 mol% based on 100 mol% of a total metal.
Clause 24. A positive electrode, comprising
   a positive electrode current collector, and
   a positive electrode active material layer on the positive electrode current collector,
   wherein the positive electrode active material layer includes the positive electrode active material of any one of clauses 1 to 17.
Clause 25. A rechargeable lithium battery, comprising
   the positive electrode of clause 24,
   a negative electrode, and
   an electrolyte.
Clause 26. The rechargeable lithium battery of clause 25, wherein
   a charging voltage is greater than or equal to about 4.45 V.

### <Description of Symbols>

| | | | |
|---|---|---|---|
| 100: | rechargeable lithium battery | 10: | positive electrode |
| 20: | negative electrode | 30: | separator |

| | | | |
|---|---|---|---|
| 40: | electrode assembly | 50: | case |

## Claims

1. A positive electrode active material, comprising
core particles including a lithium nickel-manganese-based composite oxide having a nickel content of greater than or equal to about 60 mol% based on 100 mol% of a total metal excluding lithium, and
a coating layer disposed on the surface of the core particles and including Al, Zr, and Mg.

2. The positive electrode active material as claimed in claim 1, wherein
an Al content of the coating layer is about 0.1 mol% to about 2 mol%, a Zr content of the coating layer is about 0.1 mol% to about 0.4 mol%, and an Mg content of the coating layer is about 0.1 mol% to about 0.5 mol%, based on 100 mol% of a total metal excluding lithium.

3. The positive electrode active material as claimed in claim 1 or claim 2, wherein
a ratio of Zr and Mg contents to an Al content in the coating layer is about 0.1 to about 0.65.

4. The positive electrode active material as claimed in any one of claims 1 to 3, wherein:
(i) the coating layer is in a form of a shell that continuously surrounds the surface of the core particles; and/or
(ii) the coating layer has a thickness of about 5 nm to about 500 nm.

5. The positive electrode active material as claimed in any one of claims 1 to 4, wherein:
(i) the coating layer further includes nickel, manganese, or a combination thereof; and/or
(ii) the lithium nickel-manganese-based composite oxide of the core particle has a nickel content of about 60 mol% to about 80 mol% based on 100 mol% of a total metal excluding lithium.

6. The positive electrode active material as claimed in any one of claims 1 to 5, wherein
the lithium nickel-manganese-based composite oxide of the core particle is a lithium nickel-manganese-aluminium-based composite oxide that further includes aluminium in addition to nickel and manganese, and
an aluminium content in the lithium nickel-manganese-aluminium-based composite oxide is about 1 mol% to about 3 mol% based on 100 mol% of a total metal excluding lithium.

7. The positive electrode active material as claimed in any one of claims 1 to 6, wherein
the lithium nickel-manganese-based composite oxide of the core particle is represented by Chemical Formula 1:
[Chemical Formula 1] Liₐ₁Niₓ₁Mn_{y1}Al_{z1}M¹_{w1}0_{2-b1}X_{b1}
wherein, in Chemical Formula 1, 0.9≤a1≤1.8, 0.6≤x1≤0.8, 0.1≤y1≤0.4, 0≤z1≤0.03, 0≤w1≤0.3, 0.9≤x1+y1+z1+w1≤1.1, and 0≤b1≤0.1, M¹ is one or more elements selected from B, Ba, Ca, Ce, Cr, Fe, Mg, Mo, Nb, Si, Sn, Sr, Ti, V, W, Y, and Zr, and X is one or more elements selected from F, P, and S, optionally wherein
in Chemical Formula 1, 0.6≤x1≤0.8, 0.1<y1≤0.39, 0.01≤z1≤0.03, and 0≤w1≤0.29.

8. The positive electrode active material as claimed in any one of claims 1 to 7, wherein
a cobalt content is about 0 mol% to about 0.01 mol% based on 100 mol% of a total metal excluding lithium.

9. The positive electrode active material as claimed in any one of claims 1 to 8, wherein
the core particles are in the form of secondary particles made by aggregating a plurality of primary particles.

10. The positive electrode active material as claimed in claim 9,
wherein
the positive electrode active material further includes a grain boundary coating portion including Al and disposed on the surfaces of primary particles in an internal portion of the secondary particles, optionally wherein
an Al content in the grain boundary coating portion is less than an Al content in the coating layer.

11. The positive electrode active material as claimed in claim 10, wherein:
(i) the grain boundary coating portion further includes Mg; and/or
(ii) the positive electrode active material has an average particle diameter (D₅₀) of about 10 µm to about 18 µm; and/or
(iii) the positive electrode active material does not include sodium.

12. A method of preparing a positive electrode active material, comprising
mixing a nickel-manganese-based composite hydroxide having a nickel content of greater than or equal to about 60 mol% based on 100 mol% of a total metal and a lithium raw material and performing a first heat treatment to obtain a lithium nickel-manganese-based composite oxide,
adding the obtained lithium nickel-manganese-based composite oxide to a solution of Al raw material mixed in an aqueous solvent, followed by mixing and drying, and
dry mixing the obtained product with a Zr raw material and a Mg raw material and performing a second heat treatment to obtain a positive electrode active material.

13. The method as claimed in claim 12, wherein:
(i) an Al content in the Al raw material is about 0.1 mol% to about 2 mol% based on 100 mol% of a total metal excluding lithium in the positive electrode active material,
a Zr content in the Zr raw material is about 0.1 mol% to about 0.4 mol% based on 100 mol% of a total metal excluding lithium in the positive electrode active material, and
a Mg content in the Mg raw material is about 0.1 mol% to about 0.5 mol% based on 100 mol% of a total metal excluding lithium in the positive electrode active material; and/or
(ii) the Al raw material includes aluminium nitrate, aluminium sulfate, aluminium carbonate, aluminium hydroxide, or a combination thereof,
the Zr raw material includes zirconium oxide, zirconium silicate, or a combination thereof, and
the Mg raw material includes magnesium oxide, magnesium phosphate, magnesium carbonate, or a combination thereof.

14. The method as claimed in claim 12 or claim 13, wherein:
the solution in which the aluminium raw material is mixed in the aqueous solvent has a pH of about 1.5 to about 3.5; and/or
(i) the first heat treatment is performed at about 750 °C to about 950 °C, and
the second heat treatment is performed at about 700 °C to about 850 °C; and/or
(ii) the nickel-manganese-based composite hydroxide is a nickel-manganese-aluminium-based composite hydroxide that further includes aluminium, and an aluminium content in the lithium nickel-manganese-aluminium-based composite hydroxide is about 1 mol% to about 3 mol% based on 100 mol% of a total metal.

15. A positive electrode, comprising
a positive electrode current collector, and
a positive electrode active material layer on the positive electrode current collector,
wherein the positive electrode active material layer includes the positive electrode active material as claimed in any one of claims 1 to 11.

16. A rechargeable lithium battery, comprising
the positive electrode as claimed in claim 15,
a negative electrode, and
an electrolyte, optionally wherein
a charging voltage is greater than or equal to about 4.45 V.
